# EUROPÄISCHE PATENTSCHRIFT

(11) **EP 1 925 896 B1**
(45) Veröffentlichungstag und Bekanntmachung des Hinweises auf die Patenterteilung: **05.05.2010**
(21) Anmeldenummer: 07450195.8
(22) Anmeldetag: 09.11.2007
(51) Int. Cl.: F27B 3/04, F27D 3/00, F27D 3/14, C22B 7/00, C22B 21/00

(54) **Vorrichtung zum Einbringen von Metallschrott in eine Metallschmelze**
Device for feeding metal scrap into a metal melt
Dispositif destiné à l'introduction de ferrailles dans un métal en fusion

(30) Priorität: 21.11.2006 AT 19202006
(43) Veröffentlichungstag der Anmeldung: 28.05.2008
(73) Patentinhaber: Hertwich Engineering GmbH, 5280 Braunau (AT)
(72) Erfinder: Pelech, Stefan, 5280 Braunau am Inn (AT); Hertwich, Günther, 5280 Braunau am Inn (AT)
(74) Vertreter: Hübscher, Helmut

(56) Entgegenhaltungen:
- WO-A-99/50466
- DE-A1- 2 355 951

## Beschreibung

Die Erfindung bezieht sich auf eine Vorrichtung zum Einbringen von Metallschrott in eine Metallschmelze mit einem hitzebeständig ausgekleideten, zylindrischen Schacht zum Eintragen des Metallschrotts, mit einem im wesentlichen tangential zum Schacht ausgerichteten Schmelzezulauf im Bodenbereich des Schachtes, mit einer vom Schmelzezulauf ausgehenden, ansteigenden Leitfläche für die in den Schacht strömende Metallschmelze und mit einem mittigen Schmelzeauslaß im Schachtboden.

Um kleinstückeligen Metallschrott, insbesondere Metallspäne, vorteilhaft in eine Metallschmelze eintragen zu können, ist es bekannt (WO 99/50466 A1), einen hitzefest ausgekleideten, zylindrischen Schacht vorzusehen, der einen in Bodennähe tangential im Schachtmantel mündenden Schmelzezulauf und im Anschluß an diesen Schmelzezulauf eine vom Schachtboden ausgehende Rampe aufweist, die entlang des Schachtmantels ansteigt, um durch das Anströmen der durch diese Rampe gebildeten Leitfläche für die durch den Schmelzezulauf in den Schacht gepumpte Metallschmelze im Schacht eine Umlaufströmung der Metallschmelze mit einer axialen Strömungskomponente zu erzwingen. Aufgrund eines mittig im Schachtboden vorgesehenen Schmelzeauslasses wird die entlang des Schachtmantels aufsteigende Umlaufströmung der Metallschmelze umgelenkt, wobei sich ein abwärts gerichteter, zum mittigen Schmelzeauslaß führender, trichterförmiger Schmelzewirbel ausbildet, in dem durch den Schacht von oben eingeworfener Metallschrott mitgerissen und über den Schmelzeauslaß ausgetragen wird. Dadurch kann ein Aufschwimmen des kleinstückeligen Schrotts auf der Metallschmelze vermieden und ein rasches Untertauchen in der Metallschmelze erreicht werden, wodurch Oxidationsverluste klein gehalten werden können, was insbesondere beim Einschmelzen von Aluminiumschrott von erheblicher Bedeutung ist. Nachteilig bei dieser bekannten Vorrichtung zum Eintragen von Metallschrott in eine Metallschmelze ist allerdings neben dem durch die Rampenausbildung bedingten Konstruktionsaufwand, daß die axiale Bewegungskomponente der Umlaufströmung durch die Rampenkonstruktion weitgehend konstruktiv festgelegt wird und nicht ohne weiteres an sich ändernde Bedingungen angepaßt werden kann. Um die Oxidhaut vom Aluminiumschrott vor dem Schmelzvorgang weitgehend zu lösen, ist es darüber hinaus bekannt (DE 23 55 951 A1), den Aluminiumschrott einer Aluminiumschmelze zuzuführen und die mit dem Aluminiumschrott beladene Schmelze über einen Einlauftrichter und einen an den Einlauftrichter angeschlossenen Fallschacht einem Schmelzofen zuzuführen. Wegen des tangentialen Einlaufs der Aluminiumschmelze und des Aluminiumschrotts in den Einlauftrichter ergibt sich eine innige Vermischung zwischen dem Schrott und der Schmelze mit der Wirkung, daß die Oxidhaut bedingt durch die auftretenden Reibkräfte aufreißt und abplatzt, wobei diese Aufreiß- und Abplatzwirkung durch das an den Einlauftrichter anschließende Fallrohr verstärkt wird. Da die Schmelze zusammen mit dem Schrott in den Einlauftrichter gepumpt wird, treten die sich im Zusammenhang mit dem Einbringen von Schrott in eine Schmelze ergebenden Schwierigkeiten im Bereich des Einlauftrichters nicht auf.

Der Erfindung liegt somit die Aufgabe zugrunde, eine Vorrichtung der eingangs geschilderten Art zum Einbringen von Metallschrott in eine Metallschmelze so auszugestalten, daß mit einem geringen Konstruktionsaufwand besonders gute Bedingungen für den Schrotteintrag in die Metallschmelze gewährleistet werden können.

Die Erfindung löst die gestellte Aufgabe dadurch, daß der Schachtboden einen zum Schmelzeauslaß abfallenden Kegel formt, in dem der Schmelzezulauf mündet, und daß der Kegel des Schachtbodens die ansteigende Leitfläche bildet.

Zufolge dieser Maßnahmen kann zunächst der Konstruktionsaufwand gering gehalten werden, weil lediglich ein kegelförmiger Schachtboden vorzusehen ist. Da der Schmelzezulauf tangential in den Schachtboden mündet, findet die tangential in den Bodenkegel ausströmende Metallschmelze in der Kegelfläche eine nach außen bis zum Schachtmantel ansteigende Leitfläche vor, die eine axiale Strömungskomponente der sich ausbildenden Umlaufströmung mit sich bringt. Diese entlang des Schachtmantels aufsteigende Umlaufströmung wird in Abhängigkeit von den Zu- und Ablaufibedingungen in einer bestimmen Höhe nach innen umgelenkt, so daß die Metallschmelze unter Ausbildung eines Wirbeltrichters durch den Schmelzeauslaß aus dem Schacht abfließt. Die Kegelform des Schachtbodens unterstützt dabei das Entstehen eines tiefen Strömungstrichters mit dem Vorteil, daß in diesen Trichter fallende Schrotteile in die Schmelze eintauchen und mit der Schmelze mitgerissen werden, um ohne weiteren Luftkontakt durch den Schmelzeauslaß ausgetragen zu werden. Da der Strömungsweg der aus dem Schmelzezulauf ausströmenden Metallschmelze entlang der Kegelfläche des Schachtbodens von der Einströmgeschwindigkeit der Metallschmelze abhängt, kann über die Einströmgeschwindigkeit auch Einfluß auf diesen Strömungsweg und damit auf den Anstieg der durch den Bodenkegel gebildeten Leitfläche genommen werden, was eine vorteilhafte Anpassung an unterschiedliche Verhältnisse erlaubt.

Damit sich für die aufsteigende Umlaufströmung günstige axiale Strömungskomponenten ergeben und sich unterschiedliche Einströmgeschwindigkeiten auf die Wirbelausbildung deutlich auswirken können, kann der Kegel des Schachtbodens einen Öffnungswinkel von 60° bis 120°, vorzugsweise von 90° aufweisen. Mündet dabei der Schmelzezulauf im mittleren Höhendrittel des kegelförmigen Schachtbodens, so wird der sich gegen den Schmelzeauslaß hin ausbildende Wirbeltrichter durch die diesen Wirbeltrichter speisende, aufsteigende Umlaufströmung praktisch nicht beeinträchtigt.

Der zum koaxialen Schmelzeauslaß abfallende Bodenkegel des Schachtes stellt im Bedarfsfall ein einfaches Entleeren des Schachtes über den Schmelzeauslaß sicher. Ist der axiale Schmelzeauslaß an einen radialen Ablaufkanal angeschlossen, so kann der Schmelzeauslaß in vorteilhafter Art auf der dem Ablaufkanal gegenüberliegenden Seite mit einer durch einen Stopfen verschlossenen Abstichöffnung versehen werden. Eine solche Abstichöffnung bedingt allerdings einen quer zum radialen Ablaufkanal verlaufenden Schmelzezulauf, um den Zugang zum Stopfen freizuhalten. Über die Abstichöffnung kann der Schacht entleert werden. Es ist aber auch möglich, durch die Abstichöffnung stangenförmige Werkzeuge zum Lösen erstarrter Schmelze im Bereich des Schmelzeauslasses oder des Ablaufkanals einzuführen.

In der Zeichnung ist der Erfindungsgegenstand beispielsweise dargestellt. Es zeigen
- Fig. 1: eine erfindungsgemäße Vorrichtung zum Einbringen von Metallschrott in eine Metallschmelze in einem vereinfachten Querschnitt,

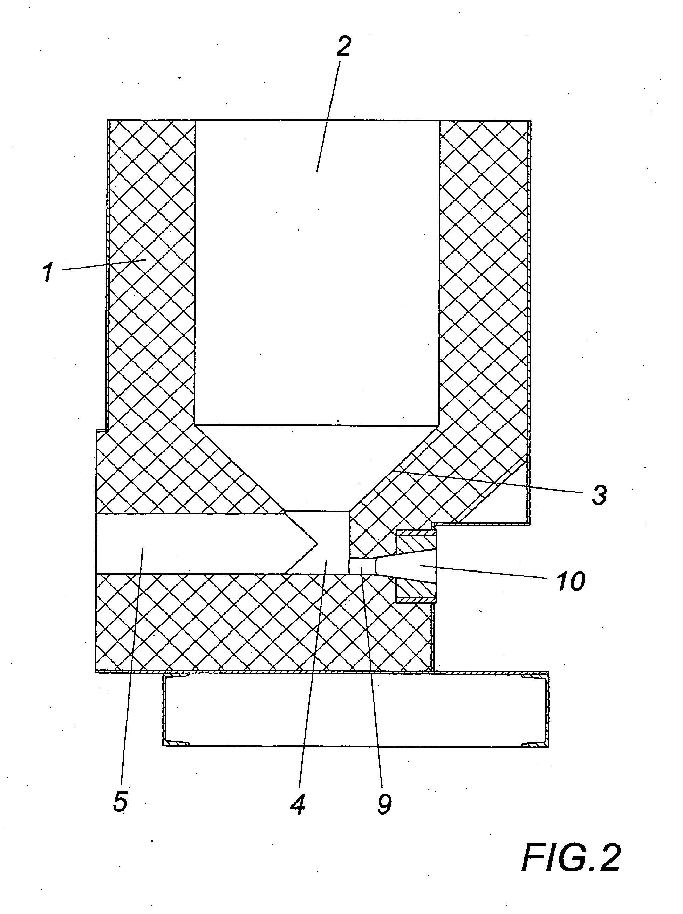

- Fig. 2: diese Vorrichtung in einem Schnitt nach der Linie II-II der Fig. 1 und
- Fig. 3: einen Schnitt nach der Linie III-III der Fig. 1.

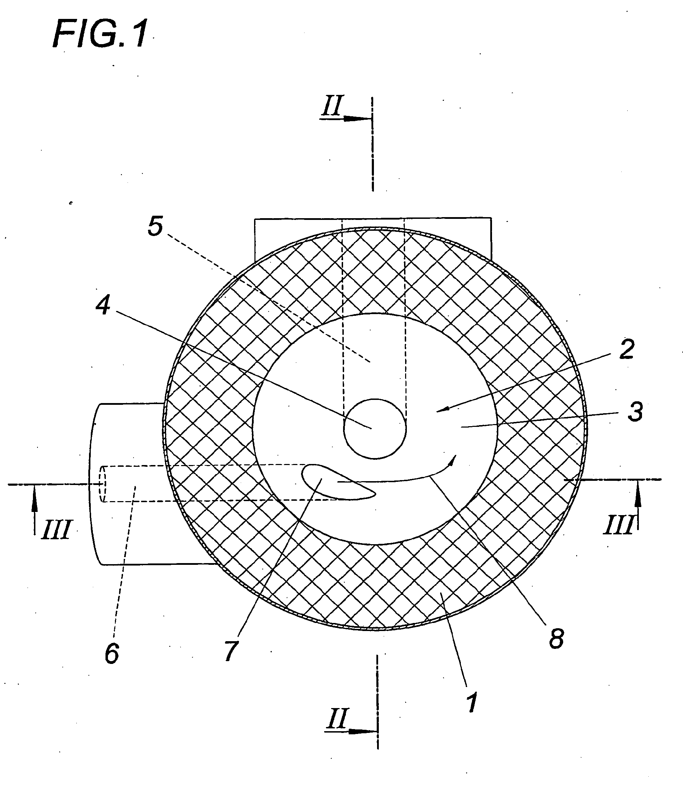

Die dargestellte Vorrichtung zum Einbringen von Metallschrott in eine Metallschmelze, insbesondere von Aluminiumspänen in eine Aluminiumschmelze, weist einen mit einer hitzebeständigen Auskleidung 1 versehenen, zylindrischen Schacht 2 auf, dessen Schachtboden 3 nach einem zum zylindrischen Schacht 2 koaxialen Kegel geformt ist. Dieser Bodenkegel fällt zu einem mittigen, axialen Schmelzeauslaß 4 ab, an den ein radialer Ablaufkanal 5 angeschlossen ist. Im mittleren Höhendrittel des kegelförmigen Schachtbodens 3 mündet ein tangentialer Schmelzezulauf 6 in den Schacht 2. Aufgrund dieser Anordnung wird die mittels einer Pumpe durch die Bodenöffnung 7 des Schmelzezulaufs 6 in den Schacht 2 geförderte Metallschmelze entlang des eine Leitfläche für den Schmelzestrom bildenden Bodenkegels in eine ansteigende Umlaufströmung umgelenkt, wie dies durch den Pfeil 8 in der Fig. 1 angedeutet ist. Die zunächst tangentiale Ausrichtung der einströmenden Metallschmelze bedingt ja eine Strömungskomponente in Umfangsrichtung und eine radial nach außen gerichtete Strömungskomponente, die aufgrund des Bodenkegels ein Ansteigen des in Umfangsrichtung umgelenkten Schmelzestroms bewirkt. Die entlang des Schachtmantels nach oben aufsteigende Umlaufströmung der Metallschmelze wird in einer von den jeweiligen Zu- und Ablaufbedingungen abhängigen Höhe nach innen umgelenkt, um unter Ausbildung eines trichterförmigen, gegen den Schmelzeauslaß 4 hin gerichteten Wirbels wieder aus dem Schacht 2 abzufließen. Wird in den Schacht 2 von oben kleinstückeliger Metallschrott eingebracht, so fällt dieser Metallschrott in den sich ausbildenden Wirbeltrichter und wird von der gegen den Schmelzeauslaß 4 strömenden Metallschmelze aufgenommen und durch den Schmelzeauslaß 4 über den Ablaufkanal 5 ausgetragen. Es ist über eine entsprechende Pumpenregelung lediglich dafür zu sorgen, daß sich der Wirbeltrichter nicht soweit gegen den Schmelzeauslaß 4 erstreckt, daß Luft mit der Schmelze durch den Ablaufkanal 6 mitgerissen werden kann.

Zur Entleerung des Schachtes 2 kann auf der dem Ablaufkanal 5 gegenüberliegenden Umfangsseite des Schmelzeauslasses 4 eine Abstichöffnung 9 vorgesehen werden, die mit Hilfe eines Stopfens 10 verschlossen wird. Durch diese Abstichöffnung 10 kann außerdem ein stangenförmiges Werkzeug in den Schmelzeauslaß 4 bzw. den daran anschließenden Ablaufkanal 5 eingeführt werden, um erstarrte Metallschmelze mechanisch zu entfernen. Der Zugang zu der dem Ablaufkanal 5 diametral gegenüberliegenden Abstichöffnung 9 bedingt, daß der Schmelzezulauf 6 quer zum radial verlaufenden Ablaufkanal 5 angeordnet wird.

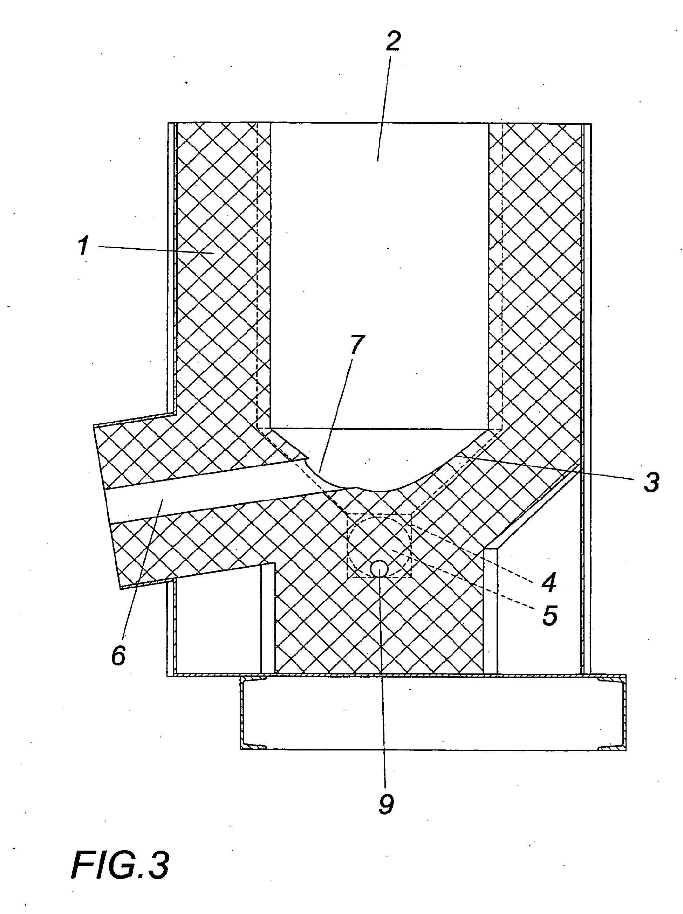

Wie der Fig. 3 entnommen werden kann, ist der Schmelzezulauf 6 gegen seine Bodenöffnung 7 hin ansteigend geführt, so daß sich eine vorteilhafte Strömung der Metallschmelze in Richtung der durch den Bodenkegel gebildeten, ebenfalls ansteigenden Leitfläche einstellt. Um günstige Anstiegsbedingungen im Bereich des Bodenkegels zu erreichen, wurde gemäß dem dargestellten Ausführungsbeispiel ein Öffnungswinkel des Bodenkegels von ca. 90° gewählt. Da das Aufstiegsverhalten der umlaufenden Schmelzeströmung von der Einströmgeschwindigkeit der Metallschmelze abhängt, kann die Schmelzeströmung auch hinsichtlich der Ausbildung eines entsprechenden Wirbeltrichters durch eine Steuerung der Einströmgeschwindigkeit an unterschiedliche Verhältnisse angepaßt werden.

## Patentansprüche

1. Vorrichtung zum Einbringen von Metallschrott in eine Metallschmelze mit einem hitzebeständig ausgekleideten, zylindrischen Schacht (2) zum Eintragen des Metallschrotts, mit einem im wesentlichen tangential zum Schacht (2) ausgerichteten Schmelzezulauf (6) im Bodenbereich des Schachtes (2), mit einer vom Schmelzezulauf (6) ausgehenden, ansteigenden Leitfläche für die in den Schacht (2) strömende Metallschmelze und mit einem mittigen Schmelzeauslaß (4) im Schachtboden (3), **dadurch gekennzeichnet, daß** der Schachtboden (3) einen zum Schmelzeauslaß (4) abfallenden Kegel formt, in dem der Schmelzezulauf (6) mündet, und daß der Kegel des Schachtbodens (3) die ansteigende Leitfläche bildet.

2. Vorrichtung nach Anspruch 1, **dadurch gekennzeichnet, daß** der Kegel des Schachtbodens (2) einen Öffnungswinkel von 60° bis 120°, vorzugsweise von 90° aufweist.

3. Vorrichtung nach Anspruch 1 oder 2, **dadurch gekennzeichnet, daß** der Schmelzezulauf (6) im mittleren Höhendrittel des kegelförmigen Schachtbodens (3) mündet.

4. Vorrichtung nach einem der Ansprüche 1 bis 3, **dadurch gekennzeichnet, daß** der Schmelzezulauf (6) quer zu einem radial an den axialen Schmelzeauslaß (4) anschließenden Ablaufkanal (5) verläuft und daß auf der dem Ablaufkanal (5) gegenüberliegenden Seite des Schmelzeauslasses (4) eine durch einen Stopfen (10) verschlossene Abstichöffnung (9) vorgesehen ist.

## Claims

1. Device for introducing metal scrap into a molten metal having a cylindrical shaft (2) lined in a heat-resistant manner for introducing the metal scrap, having a melt inlet (6), which is aligned substantially tangentially with respect to the shaft (2), in the base region of the shaft (2), having a rising conducting surface emanating from the melt inlet (6) for the molten metal flowing into the shaft (2), and having a central melt outlet (4) in the shaft base (3), **characterised in that** the shaft base (3) forms a cone which falls with respect to the melt outlet (4) and in which the melt inlet (6) issues, and that the cone of the shaft base (3) forms the rising conducting surface.

2. Device as claimed in claim 1, **characterised in that** the cone of the shaft base (2) has an opening angle of 60° to 120°, preferably 90°.

3. Device as claimed in claim 1 or 2, **characterised in that** the melt inlet (6) issues in the central third of the conical shaft base (3).

4. Device as claimed in any one of claims 1 to 3, **characterised in that** the melt inlet (6) extends transversely with respect to an outlet channel (5) which connects radially to the axial melt outlet (4), and that a discharge opening (9) which is closed by means of a plug (10) is provided on the side of the melt outlet (4) opposite the outlet channel (5).

## Revendications

1. Dispositif destiné à l'introduction de ferrailles dans une masse métallique en fusion, avec un puits (2) cylindrique, muni d'un revêtement résistant à la chaleur, pour l'introduction des ferrailles, avec une amenée de masse fondue (6), orientée sensiblement tangentiellement au puits (2), disposée dans la zone de fond du puits (2), avec une surface de guidage montante, partant de l'amenée de masse fondue (6), pour la masse fondue métallique s'écoulant dans le puits (2), et avec une évacuation de masse fondue (4) centrale, dans le fond de puits (3), **caractérisé en ce que** le fond de puits (3) forme un cône, descendant vers l'évacuation de masse fondue (4), dans lequel débouche l'amenée de masse fondue (6), et **en ce que** le cône du fond de puits (3) forme la surface de guidage montante.

2. Dispositif selon la revendication 1, **caractérisé en ce que** le cône du fond de puits (3) présente un angle d'ouverture de 60° à 120°, de préférence de 90°.

3. Dispositif selon la revendication 1 ou 2, **caractérisé en ce que** l'amenée de masse fondue (6) débouche au tiers de hauteur médian du fond de puits (3) en forme de cône.

4. Dispositif selon l'une des revendications 1 à 3, **caractérisé en ce que** l'amenée de masse fondue (6) s'étend transversalement à un canal d'évacuation (5) se raccordant radialement à l'évacuation de masse fondue (4) axiale, et **en ce que**, sur le côté, opposé au canal d'évacuation (5), de l'évacuation de masse fondue (4) est prévue une ouverture de piquage (9) obturée par un bouchon (10).
